# EUROPEAN PATENT SPECIFICATION

(11) **EP 3 831 728 B1**
(45) Date of publication and mention of the grant of the patent: **04.05.2022**
(21) Application number: 20211563.0
(22) Date of filing: 03.12.2020
(51) Int. Cl.: B65B 11/08, B65B 21/24, B65B 35/16, B65B 35/30, B65B 35/36, B65B 35/44, B65B 35/46, B65B 59/00

(54) **GROUPING UNIT OF CYLINDRICAL CONTAINERS AND RELATED METHOD**
GRUPPIERUNGSEINHEIT FÜR ZYLINDRISCHE BEHÄLTER UND ENTSPRECHENDES VERFAHREN
UNITÉ DE REGROUPEMENT DE RÉCIPIENTS CYLINDRIQUES ET PROCÉDÉ ASSOCIÉ

(30) Priority: 05.12.2019 IT 201900023040
(43) Date of publication of application: 09.06.2021
(73) Proprietor: OCME S.r.l., 43122 Parma (PR) (IT)
(72) Inventor: BOSELLI, Massimo, 43125 PARMA (IT)
(74) Representative: Branca, Emanuela

(56) References cited:
- EP-A1- 1 023 222
- EP-A1- 2 471 728
- US-A- 2 817 197
- US-A- 3 013 796
- US-A- 3 085 377
- US-A- 3 367 086
- US-A1- 2007 277 480
- US-A1- 2013 042 580
- US-A1- 2015 027 852
- US-A1- 2016 207 650
- US-A1- 2018 111 710
- US-A1- 2018 141 688
- US-A1- 2018 186 579
- US-B1- 6 295 789
- US-B1- 6 484 478
- US-B1- 7 060 143

## Description

The present invention relates to a grouping unit of cylindrical containers and a related method, wherein cylindrical containers, such as cans, bottles or the like, are grouped so as to allow packaging thereof.

The known systems for grouping containers are substantially divided into systems that do not orient containers, such as the so-called "clustering machines" where the group of products is wrapped by a cardboard, and systems that orient containers, for applications wherein containers are visible after being packed, such as in case a plastic grid of the HI-CONE ^{®} type is applied. A grouping unit according to the preamble of claim 1 is described in US 6484478 B1. Other grouping units are described for instance in US 2018/141688 A1, US 2018/111710 A1, US 2016/207650 A1, US 3367086 A, US 2013/042580 A1 and US 6295789 B1.

An aim of the present invention is to provide a grouping unit of cylindrical containers and a related method enabling to orient the products and keep them properly oriented during the linear advancement thereof.

Another aim of the present invention is to provide a grouping unit of cylindrical containers and a related method wherein the products are advanced placed in abutment against each other or placed at a predetermined distance.

Another aim of the present invention is to provide a grouping unit of cylindrical containers and a related method wherein the products may be grouped according to different pre-established configurations with no need to carry out a format change by replacing mechanical parts.

Another aim of the present invention is to provide a grouping unit of cylindrical containers and a particularly simple and functional related method.

These aims according to the present invention are reached by a grouping unit of cylindrical containers and a related method as set forth in the independent claims.

Further features are comprised in the dependent claims.

The features and advantages of a grouping unit of cylindrical containers and of a related method according to the present invention will be more evident from the following, exemplary and non-limiting, description, referred to the enclosed schematic drawings in which:

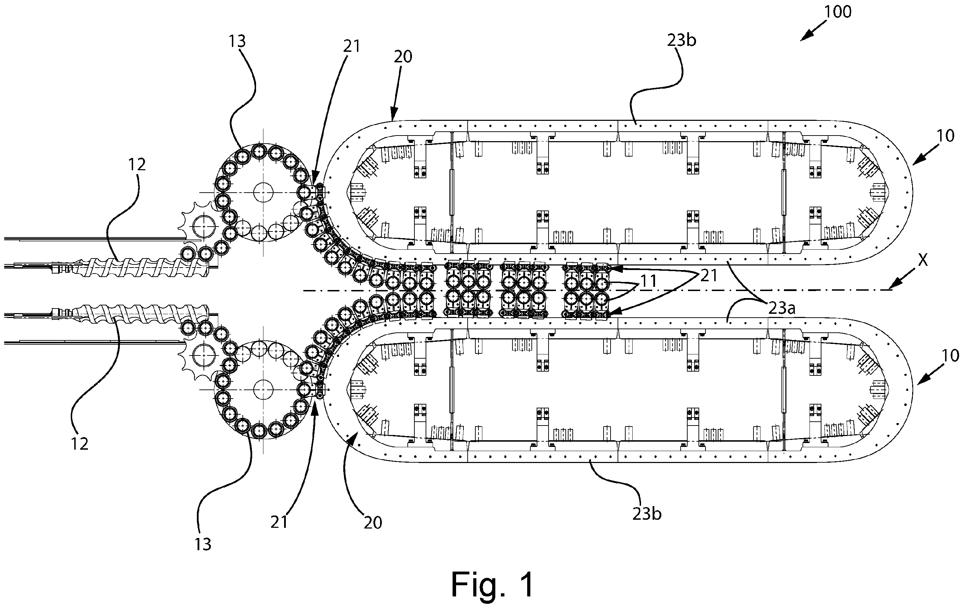

figure 1 shows a plan view of a grouping unit of cylindrical containers comprising two juxtaposed grouping lines according to the present invention;
figure 2 shows a plan view of a grouping unit of cylindrical containers comprising two juxtaposed grouping lines, also comprising a feeder of retraining elements associated above, according to a further embodiment of the present invention;
figure 3 is a perspective view of the grouping unit of figure 2;
figure 4 shows an enlarged detail of figure 3;
figures 5A and 5B show a carriage provided with means for grasping a can, respectively in rest conditions and in grasping conditions on a can;
figures 6A and 6B show a carriage provided with handling systems comprising grasping elements acting by magnetic action;
figures 7A and 7B show a carriage provided with handling systems comprising grasping elements acting by vacuum action;
figure 8 shows schematically a plan view of a grouping unit of cylindrical containers comprising a feeder of restraining elements associated below, according to a further embodiment of the present invention;
figure 9 is a perspective view of the grouping unit of figure 8.

With reference to the figures, a grouping unit of cylindrical containers indicated as a whole by 100 is shown comprising two grouping lines 10 of cylindrical containers 11, wherein each grouping line 10 comprises a step feeder 12 of the cylindrical containers 11, a star transfer 13, provided with orienting means 11, capable of orienting the containers according to a predefined configuration, and a container transport device 20.

According to the preferred embodiment, shown in the figures, the two grouping lines 10 are identical to each other and juxtaposed in a mirror-like manner along a feeding direction X of the containers, as well as synchronized by a control unit.

Providing two juxtaposed grouping lines makes it possible to group the containers, kept oriented in any format in multiples of "2", such as in the formats 2x2, 2x3, 2x4, 2x5, 2x6, etcetera.

According to another simplified embodiment of the invention a single grouping line may be employed to group the containers into "1"-based groups, such as in the formats 1x2, 1x3, 1x4, etcetera.

The transport device 20 has a closed loop path comprising an advancement branch 23a, along which a plurality of carriages 21, each one bearing a single container 11, advance along the feeding direction X, and a return branch 23b, in the illustrated example shown parallel to the advancement branch 23a, along which the carriages 21, empty, go back along the opposed direction.

Each one of the carriages 21 is coupled with electrical and/or magnetic driving means 24 for the advancement along the closed loop path, as well as with a handling system 25 for grasping a single container 11.

Each one of the carriages 21 is singularly controllable by a control unit along the closed path of the transport device independently from the other carriages 21.

The handling systems 25 have a minimum pitch which is lower than the dimension of the container 11 to be handled. It is thus possible to move the containers 11 close to each other until the mutual distance is reduced to zero, if necessary, bringing them to contact each other to transport a grouping of containers 11 at mutual contact.

For this purpose, the outer profile of the handling systems 25 is specific for each of the containers 11 which have to be restrained each time, such to avoid a lateral bulk by the handling systems 25.

Each one of the handling systems 25 comprises a lateral stabilization board 26 of the container 11, arranged substantially parallel with respect to the advancement direction X and preferably shaped in a complementary way with respect to the container 11.

The handling systems 25 preferably comprise at least a pair of elastic jaws 27, such as spring pliers or deformation pliers, for grasping on containers 11 along a vertical axis.

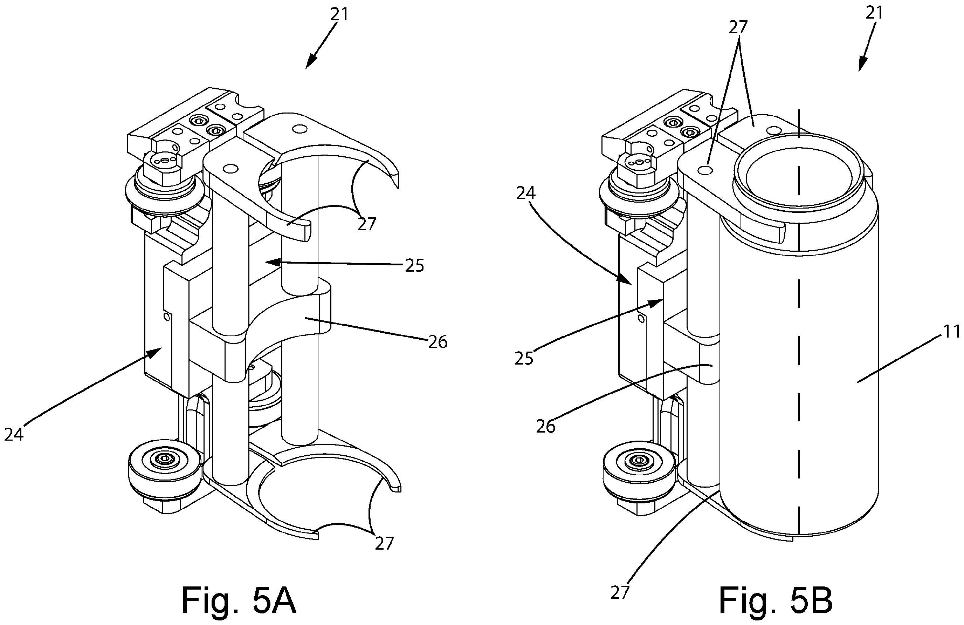

As shown in the example of figure 5, illustrating the grasping on a can container, the two pairs of jaws 27 are shaped to be housed within the respective upper and lower annular recesses of the container 11.

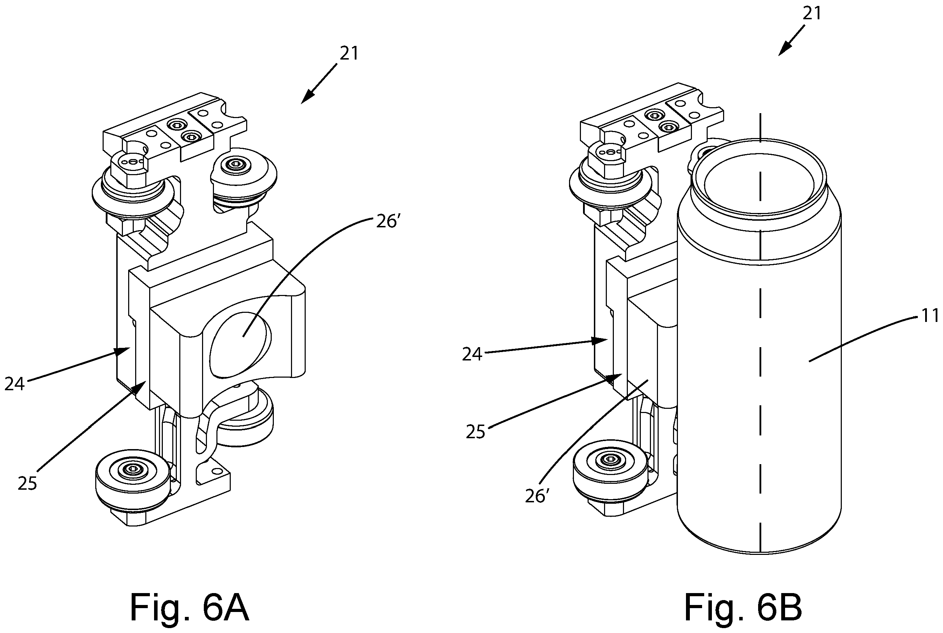

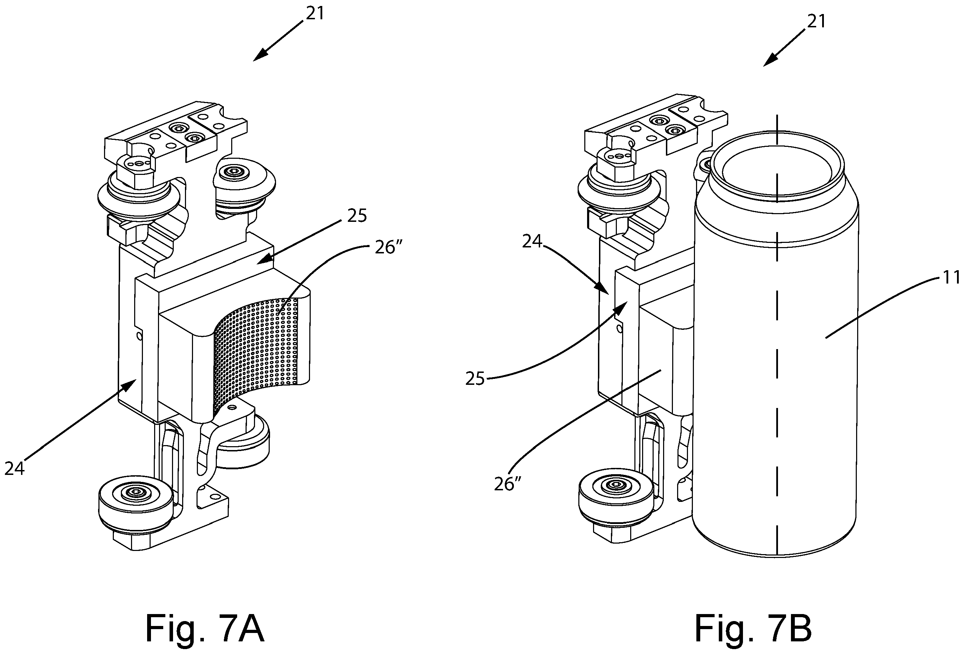

According to the invention, the handling systems 25 may comprise other grasping elements on the cylindrical outer surface of the containers, such as a magnetic action restraint system 26' or a vacuum restraint system 26", respectively shown schematically in the figures 6 and 7 in an embodiment wherein they integrate the stabilization board function.

The magnetic action restraint system 26' and/or the vacuum restraint system 26", which are shown as an alternative to the jaws 27 in the figures 6 and 7, may be also associated thereto, possibly also to only one pair of jaws 27.

The grasping and release action of each one of the handling systems 25 on-board of each carriages 21 can be mechanically driven at predetermined points of the closed path of the transport device 20, for instance by mechanical cams, not shown, or act only by interference due to the elastic action of the jaws 27.

In case of vacuum or magnetic grasping the grasping and release action will be driven by means of suitable devices which will activate and deactivate the vacuum or magnetic action.

A preferred embodiment of the grouping unit 100' of the present invention comprises a feeder 30, 30' of restraining elements 31 associated to the advancement branch 23a of the transport device 20.

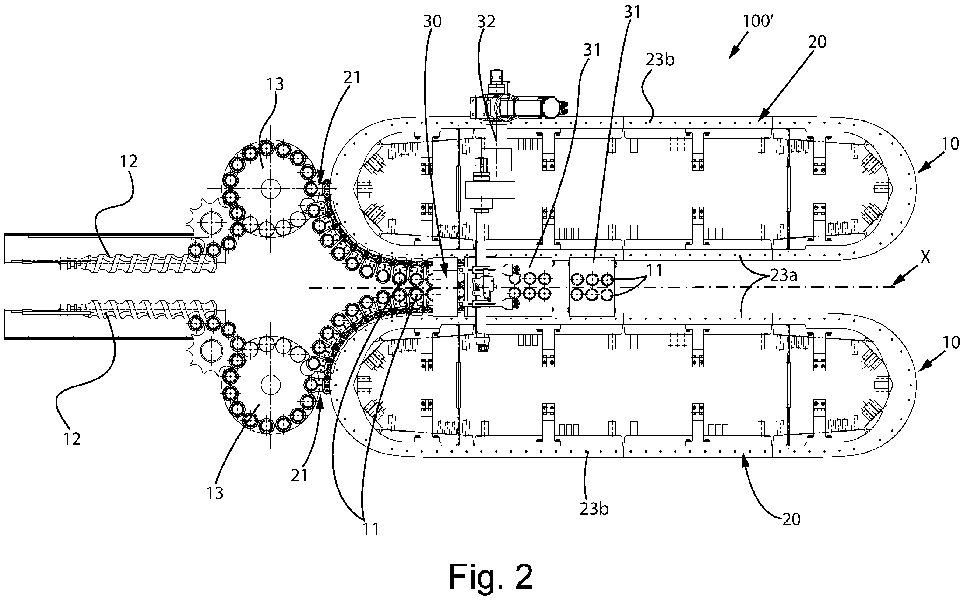

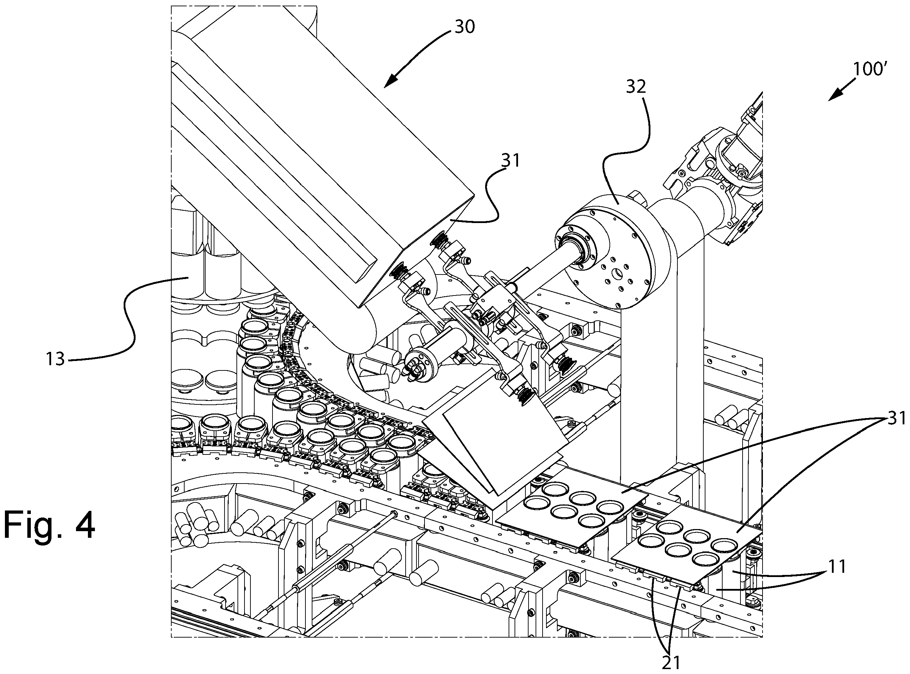

In figures 2 - 4 the feeder 30 is shown above the advancement branch 23a of the transport device 20.

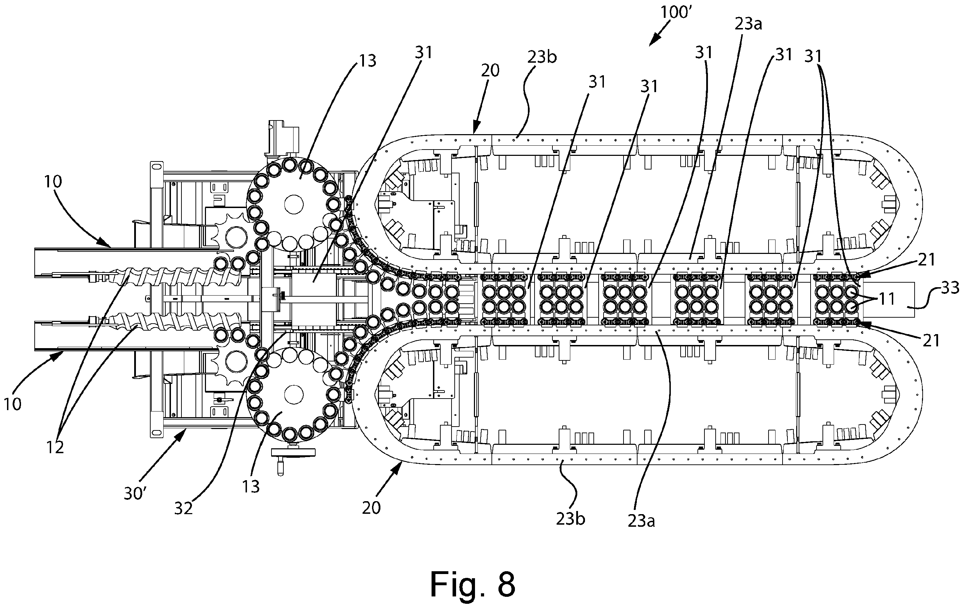

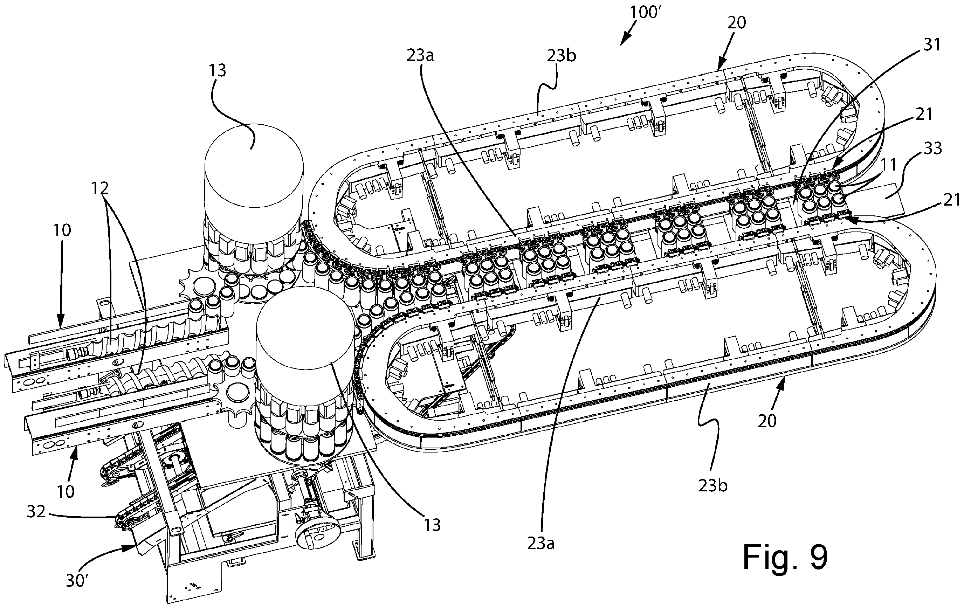

Instead, in figures 8 and 9 the feeder 30' of restraining elements 31 is schematically shown associated under the advancement branch 23a of the transport device 20.

The feeder 30, 30' comprises a feeding and application station 32 of restraining elements 31 of grouped products.

By means of the feeder 30, 30', the restraining elements 31 of the products, such as cardboard blanks or continuous belt spools, are engaged on groups of containers 11 mutually juxtaposed while advancing on the advancement branch 23a of the transport device 20 to carry out the physical grouping thereof in a sales packaging.

In the example shown in figures 2 - 4 of the feeder 30 associated above the grouping unit 100' the restraining elements 31 are blanks provided with six holes arranged in a 2 x 3 configuration to house the upper collars of the containers 11, each of which is restrained on a carriage 21 by the jaws 27.

In the example shown in figures 8 and 9 of the feeder 30' associated below the grouping unit 100' the restraining elements 31 are blanks juxtaposed to the bottom of the containers 11, which are each restrained on a carriage 21 in a 2x3 configuration by magnetic action restraining systems 26' and/or vacuum acting restraining systems 26", without jaws.

In figures 8 and 9 a longitudinal slide 33 is shown on which the blanks 31 and the containers 11 slide. This slide, fixed, may be similarly replaced by a mobile transport device, for instance of the chain type.

By means of the control unit, the carriages 21 are synchronized both with the star transfer 13 entering the transport device 20, and with the feeder 30, 30' of restraining elements 31.

The control unit also ensures the mutual synchronization between the two grouping lines 10, as well as the grouping of containers or their selective distancing with any pitch to be predetermined, also through acceleration and/or deceleration of the single carriages 21.

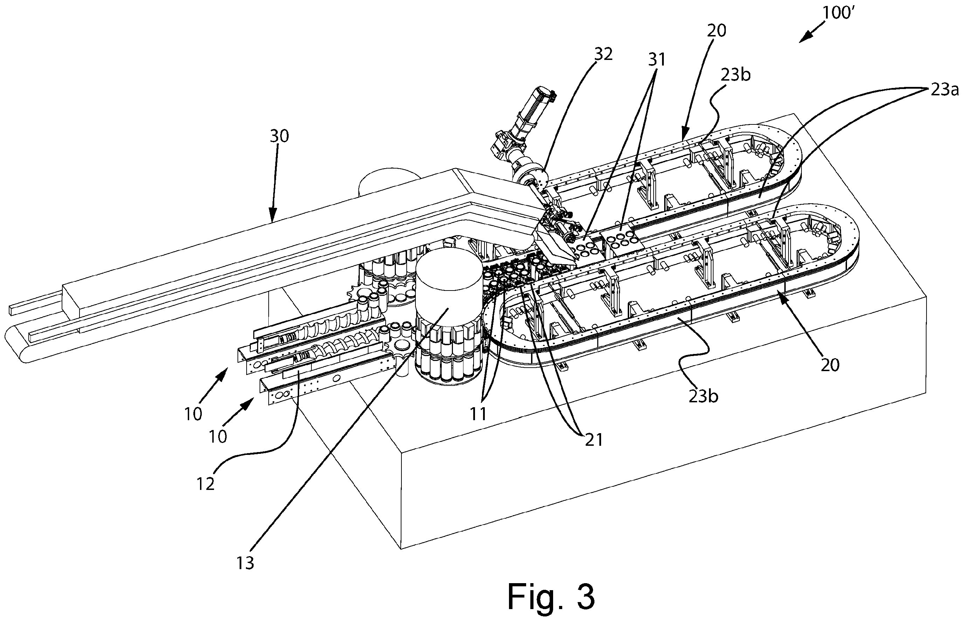

During the operation of the grouping unit 100, 100' according to the invention, as shown in the example of figures 2 and 3, the containers 11 arrive randomly; they are subdivided into two rows and then "step" arranged by means of a suitable feeder 12, such as a cochlea, star or other; they are transferred to a star 13, which enables orienting the containers such to transfer them afterwards to another element of the grouping unit 100, 100', i.e. the transport device 20, keeping a certain relative orientation.

On the transport device 20, the containers are grasped by the handling systems 25, connected to the carriages 21, which enable managing them singularly.

Once the containers 11 are grasped, the handling systems 25 and the related carriages 21 place the containers 11 at relative contact such that they are grouped according to multiples of 2, in the example 2×3.

Restraining elements 31, in the example cardboard blanks, are brought above the containers 11 from above the handling unit 100', enabling the physical grouping of the containers such to form a packaging having the above mentioned features (in the example grouping 2x3).

Based on what described and shown, the grouping method of cylindrical containers according to the invention comprises the steps of:
- feeding oriented cylindrical containers 11 to a container transport device 20;
- transporting the containers 11 along a rectilinear advancement direction X independently from each other, maintaining their orientation and putting subsequent container groups in abutment with each other or placed at a preset distance according to predetermined product groupings.

The grouping method according to the invention may provide the additional step of engaging the restraining elements 31 on groups of containers juxtaposed with each other advancing along the advancement direction X.

The grouping unit of cylindrical containers and the related method object of the present invention have the advantage to allow performing different groupings, such as in 2×2, 2×3, 2×4, 2×5, 2×6 formats and so on with no format-changing intervention on the plant.

A further advantage consists in the possibility of distancing the single groupings from each other with no format change to optimise inserting the restraining element, such as the cardboard blank provided with apertures for cans or bottles, for physically joining the grouped products in a sales packaging.

Advantageously, the grouping unit according to the invention allows to provide for the coupling and the grouping at the maximum speed of the systems as required by the market (such as 2400 containers per minute) and without speed penalizing some formats.

The grouping unit object of the present invention may also treat cans for beer and other drinks, both cans in the STD format (diameter of 66 mm) grouping them with a blank duly shaped with holes corresponding to the can dimensions, and in the "sleek" (58 mm) and slim (52 mm) formats using a different grouping system in the packaging, such as a box/basket.

The grouping unit of cylindrical containers conceived herein is susceptible to many modifications and variations, all falling within the invention; furthermore, all the details are replaceable by technically equivalent elements. In practice, the materials used, as well as the dimensions thereof, can be of any type according to the technical requirements.

## Claims

1. Grouping unit of cylindrical containers comprising at least a grouping line (10), wherein each one of said at least one grouping line (10) comprises a step feeder (12) of cylindrical containers (11), a star transfer (13) of the containers provided with orienting means, a transport device (20) of the containers, wherein the transport device (20) comprises a plurality of carriages (21), each one having a handling system (25) for a single container (11), the transport device (20) having a closed loop path comprising a advancement branch (23a), along which the carriages (21) bearing the containers advance along a feeding direction (X), and a return branch (23b), along which the empty carriages (21) go back along the opposed direction, the grouping unit further comprising two grouping lines (10) identical to each other and juxtaposed in a mirror-like manner along the feeding direction (X), said two grouping lines (10) being synchronized with each other, wherein said handling systems (25) have a minimum pitch, with each other, lower than the dimension of the container to be handled in order to transport a group of containers in mutual contact, Z the grouping unit further comprising a feeder (30, 30') of restraining elements (31), associated to the advancement branch (23a) of the transport device Z (20), the grouping unit being **characterized in that** each one of the carriages (21) is singularly and independently controllable along the closed path of the transport device (20).

2. Grouping unit according to claim 1, **characterized in that** said handling systems (25) each one comprise a lateral stabilization board (26) of the container, provided substantially parallel with respect to the advancement direction (X), preferably shaped in a complementary way with respect to the container.

3. Grouping unit according to claim 1 or 2, **characterized in that** said handling systems (25) comprise at least a pair of elastic jaws (27) for grasping on containers along a vertical axis, said at least one pair of elastic jaws (27) being shaped so as to be housed within an annular upper and/or lower recess of the containers.

4. Grouping unit according to claim 1 or 2, **characterized in that** said handling systems (25) comprise at least a magnetic action restraint system (26') or a vacuum restraint system (26").

5. Grouping unit according to claim 1, **characterized in that** said feeder (30) is associated above the advancement branch (23a) of the transport device (20).

6. Grouping unit according to claim 1, **characterized in that** said feeder (30') is associated under the advancement branch (23a) of the transport device (20).

7. Grouping unit according to any one of the preceding claims, **characterized in that** said feeder (30, 30') comprises a supplying and application station (32) of the restraining elements (31) of grouped products.

8. Method for grouping cylindrical containers comprising the steps of:
- feeding oriented cylindrical containers (11) to a container transport device (20) Z of a grouping unit comprising two grouping lines (10) identical to each other and juxtaposed in a mirror-like manner along the feeding direction (X), said two grouping lines (10) being synchronized with each other;
- transporting the containers (11) according to a rectilinear advancement direction (X) independently of each other maintaining their orientation and putting subsequent container groups abutting each other or placed at a predetermined distance according to preset product groups;
- engaging restraining elements (31) on container groups advancing juxtaposed with each other along the advancement direction (X).

## Patentansprüche

1. Gruppierungseinheit für zylindrische Behälter, die mindestens eine Gruppierungslinie (10) umfasst, wobei jede der mindestens einen Gruppierungslinie (10) eine Stufenzuführung (12) der zylindrischen Behälter (11), einen Sterntransfer (13) der Behälter, der mit Orientierungsmitteln versehen ist, und eine Transportvorrichtung (20) der Behälter umfasst, wobei die Transportvorrichtung (20) eine Vielzahl von Wagen (21) umfasst, von denen jeder ein Handhabungssystem (25) für einen einzelnen Behälter (11) aufweist, wobei die Transportvorrichtung (20) eine geschlossene Schleifenbahn aufweist, die einen Vorwärtsbewegungszweig (23a), entlang dessen die Wagen (21), die die Behälter tragen, entlang einer Zuführungsrichtung (X) vorrücken, und einen Rückwärtsbewegungszweig (23b) umfasst, entlang dessen die leeren Wagen (21) entlang der entgegengesetzten Richtung zurückfahren, wobei die Gruppierungslinie ferner zwei Gruppierungslinien (10) umfasst, die identisch zueinander sind und spiegelbildlich entlang der Zuführungsrichtung (X) nebeneinander liegen, wobei die beiden Gruppierungslinien (10) miteinander synchronisiert sind, wobei die Handhabungssysteme (25) einen minimalen Abstand zueinander haben, der geringer ist als die Abmessung des zu handhabenden Behälters, um eine Gruppe von Behältern in gegenseitigem Kontakt zu transportieren, wobei die Gruppierungseinheit ferner einen Zuführer (30, 30') von Rückhalteelementen (31) umfasst, der dem Vorwärtsbewegungszweig (23a) der Transportvorrichtung (20) zugeordnet ist, wobei die Gruppierungseinheit **dadurch gekennzeichnet ist, dass** jeder der Wagen (21) einzeln und unabhängig entlang der geschlossenen Bahn der Transportvorrichtung (20) steuerbar ist.

2. Gruppierungseinheit nach Anspruch 1, **dadurch gekennzeichnet, dass** die Handhabungssysteme (25) jeweils ein seitliches Stabilisierungsbrett (26) des Behälters umfassen, das im Wesentlichen parallel zur Vorschubrichtung (X) vorgesehen ist und vorzugsweise in Bezug auf den Behälter komplementär geformt ist.

3. Gruppierungseinheit nach Anspruch 1 oder 2, **dadurch gekennzeichnet, dass** die Handhabungssysteme (25) mindestens ein Paar elastischer Backen (27) zum Greifen von Behältern entlang einer vertikalen Achse umfassen, wobei das mindestens eine Paar elastischer Backen (27) so geformt ist, dass es in einer ringförmigen oberen und/oder unteren Aussparung der Behälter untergebracht werden kann.

4. Gruppierungseinheit nach Anspruch 1 oder 2, **dadurch gekennzeichnet, dass** die Handhabungssysteme (25) mindestens ein magnetisch wirkendes Rückhaltesystem (26') oder ein Vakuum-Rückhaltesystem (26") umfassen.

5. Gruppierungseinheit nach Anspruch 1, **dadurch gekennzeichnet, dass** die Zuführung (30) oberhalb des Vorwärtsbewegungszweiges (23a) der Transportvorrichtung (20) angeordnet ist.

6. Gruppierungseinheit nach Anspruch 1, **dadurch gekennzeichnet, dass** die Zuführung (30') unter dem Vorwärtsbewegungszweig (23a) der Transportvorrichtung (20) angeordnet ist.

7. Gruppierungseinheit nach einem der vorstehenden Ansprüche, **dadurch gekennzeichnet, dass** der Zuführer (30, 30') eine Zuführungs- und Anbringungsstation (32) für die Rückhalteelemente (31) der gruppierten Produkte umfasst.

8. Verfahren zum Gruppieren von zylindrischen Behältern, umfassend die folgenden Schritte:
- Zuführen von ausgerichteten zylindrischen Behältern (11) zu einer Behältertransportvorrichtung (20) einer Gruppierungseinheit, die zwei Gruppierungslinien (10) umfasst, die identisch zueinander sind und spiegelbildlich entlang der Zuführungsrichtung (X) nebeneinander liegen, wobei die beiden Gruppierungslinien (10) miteinander synchronisiert sind;
- Transportieren der Behälter (11) gemäß einer geradlinigen Vorschubrichtung (X) unabhängig voneinander unter Beibehaltung ihrer Ausrichtung und Aufstellen von aufeinanderfolgenden Behältergruppen, die aneinander stoßen oder in einem vorbestimmten Abstand entsprechend vorgegebener Produktgruppen angeordnet sind;
- Einrasten von Rückhalteelementen (31) an Behältergruppen, die sich nebeneinander entlang der Vorschubrichtung (X) bewegen.

## Revendications

1. Unité de regroupement de récipients cylindriques comprenant au moins une ligne de regroupement (10), dans laquelle chacune desdites au moins une ligne de regroupement (10) comprend un alimentateur pas à pas (12) de récipients cylindriques (11), un transfert en étoile (13) des récipients fourni de moyens d'orientation, un dispositif de transport (20) des récipients, dans laquelle le dispositif de transport (20) comprend une pluralité de chariots (21), chacun ayant un système de manipulation (25) pour un seul récipient (11), le dispositif de transport (20) ayant un parcours en boucle fermée comprenant une branche d'avancement (23a), le long de laquelle les chariots (21) portant les récipients avancent le long d'une direction d'alimentation (X), et une branche de retour (23b), le long de laquelle les chariots vides (21) retournent le long de la direction opposée, l'unité de regroupement comprenant en outre deux lignes de regroupement (10) identiques l'une à l'autre et juxtaposées à la manière d'un miroir le long de la direction d'alimentation (X), lesdites deux lignes de regroupement (10) étant synchronisées l'une avec l'autre, dans laquelle lesdits systèmes de manipulation (25) ont un pas minimum, l'un avec l'autre, inférieur à la dimension du récipient à manipuler afin de transporter un groupe de récipients en contact mutuel, l'unité de regroupement comprenant en outre un alimentateur (30, 30') d'éléments de retenue (31), associé à la branche d'avancement (23a) du dispositif de transport (20), l'unité de regroupement étant **caractérisée en ce que** chacun des chariots (21) est contrôlable individuellement et indépendamment le long du parcours fermé du dispositif de transport (20).

2. Unité de regroupement selon la revendication 1, **caractérisée en ce que** lesdits systèmes de manipulation (25) comprennent chacun une planche de stabilisation latérale (26) du récipient, prévue sensiblement parallèle à la direction d'avancement (X), de préférence formée d'une manière complémentaire par rapport au récipient.

3. Unité de regroupement selon la revendication 1 ou 2, **caractérisée en ce que** lesdits systèmes de manipulation (25) comprennent au moins une paire de mâchoires élastiques (27) pour saisir des récipients le long d'un axe vertical, ladite au moins une paire de mâchoires élastiques (27) étant formée de manière à être logée à l'intérieur d'un évidement annulaire supérieur et/ou inférieur des récipients.

4. Unité de regroupement selon la revendication 1 ou 2, **caractérisée en ce que** lesdits systèmes de manipulation (25) comprennent au moins un système de retenue à action magnétique (26') ou un système de retenue à vide (26").

5. Unité de regroupement selon la revendication 1, **caractérisée en ce que** ledit alimentateur (30) est associé au-dessus de la branche d'avancement (23a) du dispositif de transport (20).

6. Unité de regroupement selon la revendication 1, **caractérisée en ce que** ledit alimentateur (30') est associé au-dessous de la branche d'avancement (23a) du dispositif de transport (20).

7. Unité de regroupement selon l'une quelconque des revendications précédentes, **caractérisée en ce que** ledit alimentateur (30, 30') comprend un poste de fourniture et d'application (32) des éléments de retenue (31) de produits regroupés.

8. Procédé de regroupement de récipients cylindriques comprenant les étapes suivantes :
- alimenter des récipients (11) cylindriques orientés à un dispositif de transport (20) de récipients d'une unité de regroupement comprenant deux lignes de regroupement (10) identiques l'une à l'autre et juxtaposées à la manière d'un miroir le long de la direction d'alimentation (X), lesdites deux lignes de regroupement (10) étant synchronisées l'une avec l'autre ;
- transporter les récipients (11) selon une direction d'avancement (X) rectiligne indépendamment les uns des autres en maintenant leur orientation et en mettant les groupes de récipients consécutifs en butée les uns contre les autres ou placés à une distance prédéterminée selon des groupes de produits prédéfinis ;
- engager des éléments de retenue (31) sur des groupes de récipients avançant juxtaposés les uns aux autres le long de la direction d'avancement (X).
